# FASCICULE DE BREVET EUROPEEN

(11) **EP 0 707 996 B1**
(45) Date de publication et mention de la délivrance du brevet: **24.06.1998**
(21) Numéro de dépôt: 95116103.3
(22) Date de dépôt: 12.10.1995
(51) Int. Cl.: B60K 11/04, F01P 5/02

(54) **Procédé de fixation d'une buse sur un radiateur de refroidissement**
Verfahren zur Befestigung einer Luftzuführung an einem Kühlradiator
Method of fixation of a cool assembly to a cooling radiator

(30) Priorité: 17.10.1994 FR 9412367
(43) Date de publication de la demande: 24.04.1996
(73) Titulaire: VALEO THERMIQUE MOTEUR, 78320 Le Mesnil Saint-Denis (FR)
(72) Inventeur: Boquel, Dany, F-78660 Ablis (FR); Mirot, Gérard, F-78890 Garancieres (FR)
(74) Mandataire: Gamonal, Didier

(56) Documents cités:
- EP-A- 0 219 021
- DE-A- 3 404 887
- DE-A- 3 744 644
- GB-A- 358 858

## Description

L'invention concerne un procédé d'assemblage mutuel d'un radiateur destiné au refroidissement d'un fluide par échange de chaleur avec un flux d'air, et d'une buse destinée à canaliser ledit flux d'air immédiatement avant ou après la traversée du radiateur, notamment dans un véhicule automobile, le radiateur et la buse venant en contact mutuel par des lames de contact respectives, mutuellement accolées, s'étendant sensiblement selon un plan de contact transversal à l'axe du flux d'air.

Un tel assemblage est habituellement réalisé au moyen de vis qui s'engagent dans des trous ménagés dans les lames de contact du radiateur et de la buse. Avant d'engager les vis, il faut positionner la buse par rapport au radiateur de façon que leurs trous respectifs soient en concordance. Cette opération est rendue difficile lorsque la buse présente un poids et/ou un encombrement importants, notamment lorsqu'elle est assemblée à un radiateur de véhicule industriel, dont la largeur et la hauteur peuvent atteindre ou dépasser 1 m.

Le but de l'invention est de remédier à cet inconvénient, et de faciliter le positionnement de la buse par rapport au radiateur.

L'invention vise notamment un procédé du genre défini en introduction, et prévoit que les lames de contact de la buse présentent des pattes d'accrochage flexibles élastiquement associées chacune à un évidement des lames de contact du radiateur et propres à s'appuyer élastiquement sur la face arrière de celles-ci, tournée à l'opposé des lames de contact de la buse, de façon à appliquer les lames de contact les unes contre les autres, et en ce que, pour amener une patte sur la face arrière de la lame de contact du radiateur, on met en contact mutuel les lames de contact de la buse et du radiateur en une position mutuelle telle que la patte soit logée dans l'évidement correspondant, et on fait glisser la buse par rapport au radiateur selon le plan de contact, dans le sens défini par l'orientation de la patte, de façon que le bord de l'évidement s'insère sous la patte en déformant celle-ci élastiquement.

Des caractéristiques optionnelles de l'invention, complémentaires ou alternatives, sont énoncées ci-après :
- Le plan de contact est sensiblement vertical.
- Les pattes d'accrochage sont orientées vers le bas et sont toutes simultanément mises en place sur ladite face arrière par un glissement vers le bas de la buse.
- Lorsque la buse a atteint la position voulue par rapport au radiateur, on stabilise cette position au moyen de pièces de fixation telles que des vis.
- Des pièces de fixation sont prévues seulement à la partie supérieure de l'assemblage, le radiateur et la buse étant maintenus en contact mutuel à la partie inférieure exclusivement par les pattes d'accrochage. Grâce à la présence des pattes d'accrochage, l'immobilisation stable de la buse par rapport au radiateur ne nécessite plus la présence de telles pièces de fixation à la partie inférieure.
- La buse comporte sur chacun de ses côtés latéraux, de part et d'autre du flux d'air, une patte d'accrochage à sa partie supérieure et deux pattes d'accrochage à sa partie inférieure.
- Les pattes d'accrochage sont découpées dans les lames de contact de la buse et décalées légèrement hors du plan de celles-ci.
- Chaque patte d'accrochage vient initialement en contact avec la lame de contact du radiateur par une face d'attaque inclinée par rapport au plan de contact, favorisant sa déformation.

L'invention a également pour objet une buse destinée à canaliser un flux d'air et propre à être assemblée, par le procédé tel que défini ci-dessus, à un radiateur destiné à être traversé par ledit flux d'air, cette buse comportant des lames de contact s'étendant sensiblement selon un plan de contact transversal à l'axe du flux d'air et munies de pattes d'accrochage flexibles élastiquement.

L'invention porte encore sur un ensemble tel qu'il peut être obtenu par le procédé ci-dessus, comprenant un radiateur destiné au refroidissement d'un fluide par échange de chaleur avec un flux d'air, et une buse destinée à canaliser ledit flux d'air immédiatement avant ou après la traversée du radiateur, le radiateur et la buse venant en contact mutuel par des lames de contact respectives, mutuellement accolées, s'étendant sensiblement selon un plan de contact transversal à l'axe du flux d'air, les lames de contact de la buse présentant des pattes d'accrochage flexibles élastiquement traversant chacune un évidement ménagé dans les lames de contact du radiateur et venant s'appuyer élastiquement sur la face arrière de celles-ci, au voisinage desdits évidements.

Les caractéristiques et avantages de l'invention seront exposés plus en détail dans la description ci-après, en se référant aux dessins annexes, sur lesquels :

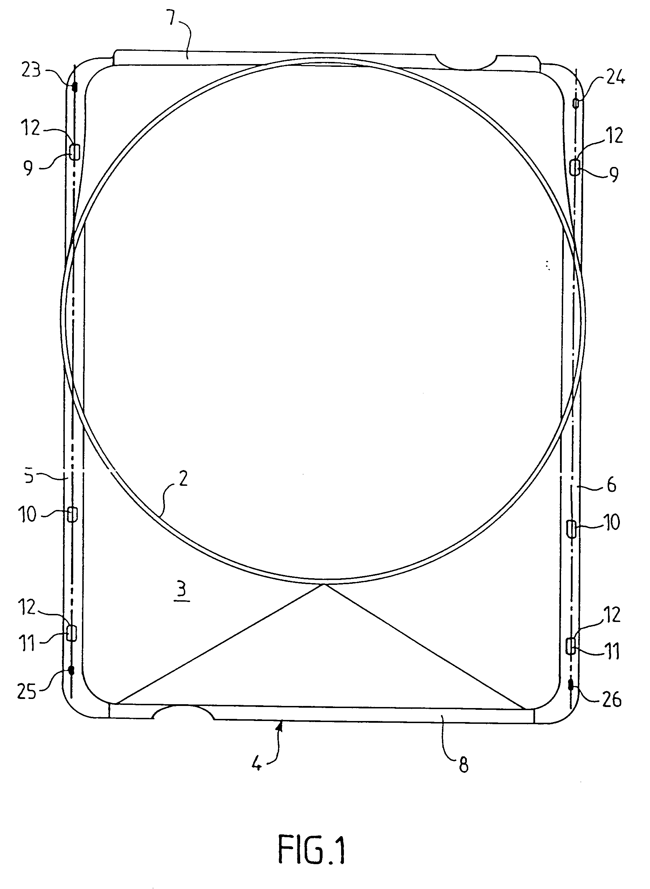

- La figure 1 est une vue de face d'un mode de réalisation préféré d'une buse selon l'invention ;
- La figure 2 est une vue de côté de la buse de la figure 1 ;
- La figure 3 est une vue partielle de côté, à plus grande échelle et en coupe, montrant une patte d'accrochage ;
- La figure 4 est une vue analogue à la figure 3, montrant la patte d'accrochage en prise avec le radiateur ;
- La figure 5 est une vue analogue à la figure 2, relative à un second mode de réalisation de la buse ;
- La figure 6 est une vue de dessus de la buse de la figure 5 ;
- La figure 7 en est une vue analogue à la figure 2 ; et
- La figure 8 est une vue partielle de dessus, à plus grande échelle et en coupe, montrant une patte d'accrochage de cette même buse.

Dans l'un et l'autre des deux modes de réalisation illustrés, la buse présente une même forme générale bien connue, dont les éléments sont désignés par les mêmes numéros de référence dans les différentes figures. La buse comprend ainsi un tunnel tubulaire 1 d'axe horizontal, composé d'une région cylindrique de révolution 2 de faible longueur axiale, destinée à entourer un ventilateur, et d'une région de transition 3 dont le contour, dans un plan radial, évolue progressivement de la section circulaire de la région cylindrique 2 à la section sensiblement rectangulaire du passage d'air à travers le radiateur non représenté associé à la buse. La région de transition se raccorde, à l'opposé de la région cylindrique 2, à une bride 4 tournée radialement vers l'extérieur, sensiblement dans un plan radial, destinée à s'appliquer sur le radiateur. La bride 4 comprend deux bandes latérales opposées 5 et 6 allongées dans la direction verticale, reliées entre elles par des bandes horizontales supérieure 7 et inférieure 8. Les bandes 5 et 6, sensiblement planes et de faible épaisseur, ont la forme de lames. Elles permettent la fixation de la buse sur des éléments verticaux latéraux du radiateur, par exemple des boîtes à fluide latérales ou des traverses reliant entre elles des boîtes à fluide supérieure et inférieure.

Selon l'invention, trois pattes 9, 10 et 11, alignées dans la direction verticale, sont découpées dans chacune des bandes 5 et 6, la patte 9 étant située plus haut et les pattes 10 et 11 plus bas que l'axe de la région cylindrique 2 de la buse. Chaque patte est obtenue au moyen d'une découpe en U dont les branches sont tournées vers le haut, cette ligne de découpe délimitant une portion de forme générale rectangulaire reliée au reste de la bande par son côté supérieur horizontal 12.

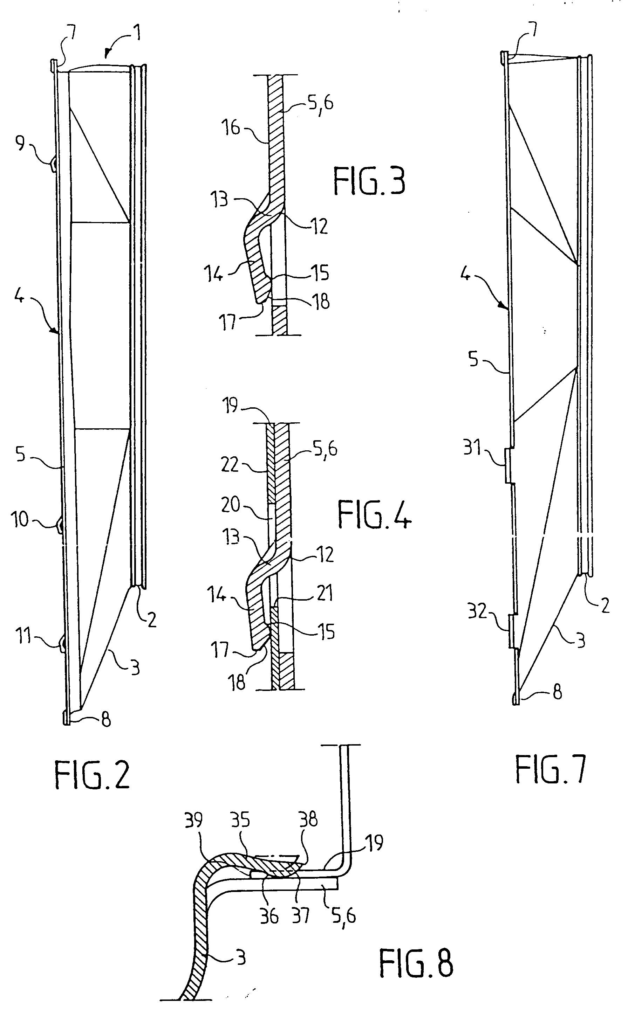

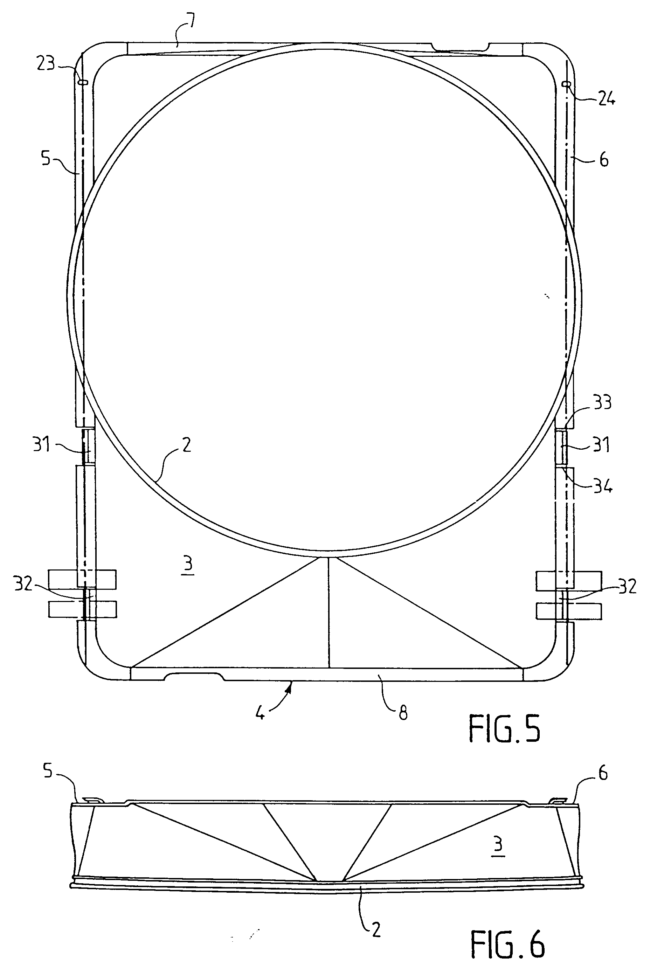

Comme vu en coupe longitudinale à la figure 3, la patte est repliée pour former deux régions principales, à savoir une première région 13 de plus faible longueur, repliée vers l'arrière, c'est-à-dire du côté où doit se trouver le radiateur après assemblage, à partir d'une ligne de pliage s'étendant selon le côté 12, et une seconde région 14 de plus grande longueur, se raccordant à la précédente par un arrondi, et faiblement inclinée par rapport au plan de la bande 5, 6 pour se rapprocher de celle-ci du haut vers le bas. La région 14 présente, au voisinage de son extrémité libre inférieure 17, une nervure transversale 15 à profil arrondi. Entre le plan vertical tangent à la nervure, qui est sensiblement confondu avec le plan de la face arrière 16 de la bande 5, 6, et l'extrémité inférieure 17 de la région 14, celle-ci est limitée vers l'arrière par une face 18 faisant un angle aigu avec la verticale et qui forme une rampe s'écartant progressivement du plan 16, du haut vers le bas, jusqu'à une distance au moins égale à l'épaisseur de la lame 19 du radiateur (figure 4) sur laquelle s'appuie la bande 5, 6, après assemblage. A chacune des pattes 9 à 11 d'une bande 5 ou 6 est associée une ouverture sensiblement rectangulaire 20 traversant la lame 19 correspondante. L'ouverture 20 présente une hauteur et une largeur suffisantes pour loger entièrement la patte.

Pour réaliser l'assemblage, après avoir approché la buse du radiateur de façon à appliquer les bandes 5, 6 sur les lames 19 et introduit les pattes 9 à 11 dans les ouvertures 20, on fait glisser la buse vers le bas, ce qui amène la rampe 18 de chaque patte en appui sur le bord inférieur 21 de l'ouverture 20 correspondante. Lors de la poursuite de ce mouvement, le bord 21 glisse le long de la rampe 18 en repoussant élastiquement vers l'arrière la région 14 de la patte, jusqu'à ce que la crête de la nervure 15 vienne s'appliquer sur la face arrière 22 de la lame 19. Le mouvement est interrompu par l'arrivée de la région 13 de la patte, qui traverse l'ouverture 20, en appui sur le bord 21. Les positions de la région 13 par rapport à la bande 5, 6 et du bord 21 par rapport à la lame 19 sont choisies de telle façon qu'en fin de mouvement deux trous 23 et 24, traversant respectivement les bandes 5 et 6 au voisinage de leur extrémité supérieure, viennent en coïncidence avec des trous correspondants prévus sur le radiateur, ces trous pouvant recevoir des vis complétant la solidarisation mutuelle de la buse et du radiateur. Deux trous 25 et 26 semblables aux trous 23 et 24, traversant les bandes 5 et 6 au voisinage de leur extrémité inférieure, ne sont pas utilisés dans le procédé selon l'invention, mais permettent de monter la buse sur un radiateur traditionnel prévu pour un assemblage par quatre vis.

La buse illustrée aux figures 5 à 8 diffère de celle décrite précédemment essentiellement en ce que, pour chacune des bandes 5 et 6, les trois pattes 9 à 11 dirigées vers le bas sont remplacées par deux pattes 31 et 32 orientées latéralement, toutes deux situées au-dessous de l'axe de la région cylindrique 2 du tunnel 1. Chacune de ces pattes est obtenue au moyen de deux lignes de découpe horizontales superposées 33 et 34 s'étendant sur toute la largeur de la bande 5, 6 jusqu'à son raccordement avec la région de transition 3, dans une zone de celle-ci qui, dans l'exemple représenté, s'étend dans un plan vertical axial, c'est-à-dire perpendiculaire au plan de la bande 5, 6. Ici encore, la patte est décalée vers l'arrière par rapport au plan de la bande 5, 6 et présente une région 35 qui se rapproche de ce plan selon un petit angle, du centre vers le bord latéral de la buse. Cette région 35 présente elle aussi, au voisinage de son extrémité libre latérale, une nervure 36 et une rampe 37 analogues à la nervure 15 et à la rampe 18 des pattes 9 à 11.

Les bandes 5, 6 et les pattes 31, 32 coopèrent avec des lames latérales 19 présentant des encoches pour recevoir les pattes, débouchant latéralement vers le centre. Les fonds verticaux 39 de deux encoches situées à la même hauteur sur les deux lames 19 respectivement sont à une distance mutuelle inférieure à la distance entre les extrémités libres 38 des deux pattes correspondantes.

La mise en place de la buse selon le second mode de réalisation s'effectue comme suit. On applique d'abord l'une des bandes 5 et 6 sur la lame 19 correspondante, dans une position décalée horizontalement par rapport à la position définitive, les pattes de cette bande étant logées dans les encoches. On déplace ensuite la buse horizontalement en direction de sa position définitive, la région 35 des pattes étant repoussée vers l'arrière par le fond 39 comme décrit ci-dessus à propos du premier mode de réalisation et représenté en traits mixtes à la figure 8. Le mouvement latéral se poursuit au-delà de la position définitive de façon à amener les pattes de l'autre bande dans les encoches correspondantes. Un mouvement en sens inverse de la buse permet alors de faire passer à leur tour les pattes de la seconde bande sur la face arrière de la lame 19 correspondante. Lorsque la position définitive est atteinte, les pattes des deux bandes se trouvent appliquées sur la face arrière des lames du radiateur et s'appuient verticalement sur les côtés inférieurs des encoches. La fixation est complétée par deux vis s'engageant dans les trous 23 et 24 prévus à la partie supérieure des bandes 5 et 6 respectivement. Dans cette version, il n'est pas prévu de trous à la partie inférieure pour la fixation de la buse sur un radiateur traditionnel.

## Revendications

1. Procédé d'assemblage mutuel d'un radiateur destiné au refroidissement d'un fluide par échange de chaleur avec un flux d'air, et d'une buse destinée à canaliser ledit flux d'air immédiatement avant ou après la traversée du radiateur, notamment dans un véhicule automobile, le radiateur et la buse venant en contact mutuel par des lames de contact respectives (5, 6, 19), mutuellement accolées, s'étendant sensiblement selon un plan de contact transversal à l'axe du flux d'air, caractérisé en ce que les lames de contact (5, 6) de la buse présentent des pattes d'accrochage (9-11) flexibles élastiquement associées chacune à un évidement (20) des lames de contact du radiateur et propres à s'appuyer élastiquement sur la face arrière (22) de celles-ci, tournée à l'opposé des lames de contact de la buse, de façon à appliquer les lames de contact les unes contre les autres, et en ce que, pour amener une patte sur la face arrière de la lame de contact du radiateur, on met en contact mutuel les lames de contact de la buse et du radiateur en une position mutuelle telle que la patte soit logée dans l'évidement correspondant, et on fait glisser la buse par rapport au radiateur selon le plan de contact, dans le sens défini par l'orientation de la patte, de façon que le bord (21) de l'évidement s'insère sous la patte en déformant celle-ci élastiquement.

2. Procédé selon la revendication 1, caractérisé en ce que le plan de contact est sensiblement vertical.

3. Procédé selon la revendication 2, caractérisé en ce que les pattes d'accrochage (9-11) sont orientées vers le bas et sont toutes simultanément mises en place sur ladite face arrière par un glissement vers le bas de la buse.

4. Procédé selon l'une des revendications précédentes, caractérisé en ce que, lorsque la buse a atteint la position voulue par rapport au radiateur, on stabilise cette position au moyen de pièces de fixation telles que des vis.

5. Procédé selon la revendication 4, rattachée à la revendication 2, caractérisé en ce que des pièces de fixation sont prévues seulement à la partie supérieure de l'assemblage, le radiateur et la buse étant maintenus en contact mutuel à la partie inférieure exclusivement par les pattes d'accrochage.

6. Procédé selon l'une des revendications 3 et 5, caractérisé en ce que la buse comporte sur chacun de ses côtés latéraux, de part et d'autre du flux d'air, une patte d'accrochage (9) à sa partie supérieure et deux pattes d'accrochage (10, 11) à sa partie inférieure.

7. Procédé selon l'une des revendications précédentes, caractérisé en ce que les pattes d'accrochage sont découpées dans les lames de contact de la buse et décalées légèrement hors du plan de celles-ci.

8. Procédé selon l'une des revendications précédentes, caractérisé en ce que chaque patte d'accrochage vient initialement en contact avec la lame de contact du radiateur par une face d'attaque (18) inclinée par rapport au plan de contact, favorisant sa déformation.

9. Buse destinée à canaliser un flux d'air et propre à être assemblée, par le procédé selon l'une des revendications précédentes, à un radiateur destiné à être traversé par ledit flux d'air, cette buse comportant des lames de contact (5, 6) s'étendant sensiblement selon un plan de contact transversal à l'axe du flux d'air et munies de pattes d'accrochage (9-11) flexibles élastiquement.

10. Ensemble tel qu'il peut être obtenu par le procédé selon l'une des revendications 1 à 8, comprenant un radiateur destiné au refroidissement d'un fluide par échange de chaleur avec un flux d'air, et une buse destinée à canaliser ledit flux d'air immédiatement avant ou après la traversée du radiateur, le radiateur et la buse venant en contact mutuel par des lames de contact respectives (5, 6, 19), mutuellement accolées, s'étendant sensiblement selon un plan de contact transversal à l'axe du flux d'air, les lames de contact (5, 6) de la buse présentant des pattes d'accrochage (9-11) flexibles élastiquement traversant chacune un évidement (20) ménagé dans les lames de contact (19) du radiateur et venant s'appuyer élastiquement sur la face arrière (22) de celles-ci, au voisinage desdits évidements.

## Claims

1. A method of assembling together a radiator for cooling a fluid by heat exchange with a stream of air, and a housing for channelling the said stream of air immediately before or after the latter passes through the radiator, in particular in a motor vehicle, the radiator and the housing being in mutual contact through respective contact web portions (5, 6, 19), laid together and lying substantially in a plane of contact transverse to the axis of the flow of air, characterised in that the contact web portions (5, 6) of the housing have elastically flexible clipping lugs (9 - 11), each associated with an aperture (20) in the contact web portions of the radiator, the lugs being adapted to bear elastically on the rear face (22) of the latter, which faces away from the contact web portions of the housing, whereby to apply the contact web portions against each other, and in that, in order to attach a lug on the rear face of the contact web portion of the radiator, the contact web portions of the housing and that of the radiator are put into mutual contact in a mutual position such that the lug is engaged in the corresponding aperture, and the housing is caused to slide with respect to the radiator in the plane of contact, in the direction defined by the orientation of the lug, so that the edge (21) of the aperture becomes inserted under the lug, deforming the latter elastically.

2. A method according to Claim 1, characterised in that the plane of contact is substantially vertical.

3. A method according to Claim 2, characterised in that the clipping lugs (9 - 11) are orientated downwardly, and are all put into place simultaneously on the said rear face by sliding movement towards the bottom of the housing.

4. A method according to one of the preceding Claims, characterised in that, when the housing has reached the required position with respect to the radiator, this position is stabilised by means of fastening members such as screws.

5. A method according to Claim 4 when dependent on Claim 2, characterised in that fastening members are provided only in the upper part of the assembly, the radiator and the housing being held in mutual contact in the lower part by the clipping lugs only.

6. A method according to Claim 3 or Claim 5, characterised in that the housing has, on each of its lateral sides, on either side of the stream of air, one clipping lug (9) in its upper part and two clipping lugs (10, 11) in its lower part.

7. A method according to one of the preceding Claims, characterised in that the clipping lugs are pressed out in the contact web portions of the housing, and offset slightly out of the plane of these latter.

8. A method according to one of the preceding Claims, characterised in that each clipping lug makes initial contact with the contact web portion of the radiator through an engagement face (18) which is inclined with respect to the plane of contact so as to favour its deformation.

9. A housing for channelling a stream of air and adapted to be assembled, by the method according to one of the preceding Claims, to a radiator adapted for the said stream of air to pass through it, the said housing having contact web portions (5, 6) lying substantially in a plane of contact transverse to the axis of flow of the air and provided with elastically flexible clipping lugs (9 - 11).

10. An assembly such as may be obtained by the method according to one of Claims 1 to 8, comprising a radiator for cooling a fluid by heat exchange with a stream of air, and a housing adapted to channel the said stream of air immediately before or after passing through the radiator, the radiator and the housing making mutual contact through respective contact web portions (5, 6, 19), laid together and lying substantially in a plane of contact transverse to the axis of flow of the air, the contact web portions (5, 6) of the housing having elastically flexible clipping lugs (9 - 11) each extending through an aperture (20) formed in the contact web portions (19) of the radiator and engaging elastically on the rear face (22) of these latter in the vicinity of the said apertures.

## Patentansprüche

1. Verfahren zur wechselseitigen Verbindung eines Kühlradiators zur Kühlung eines Fluids durch Wärmeaustausch mit einem Luftstrom und einer Luftzuführung zur Kanalisierung des besagten Luftstroms unmittelbar vor oder nach dem Durchgang durch den Kühlradiator, insbesondere in einem Kraftfahrzeug, wobei der Kühlradiator und die Luftzuführung durch zugehörige, aneinander angefügte Kontaktlamellen (5, 6, 19) miteinander in Berührung kommen, die sich in etwa in einer quer zur Achse des Luftstroms verlaufenden Kontaktebene erstrecken , **dadurch gekennzeichnet,** daß die Kontaktlamellen (5, 6) der Luftzuführung elastisch biegsame Einhakansätze (9-11) aufweisen, die jeweils einer Aussparung (20) der Kontaktlamellen des Kühlradiators zugeordnet sind und die elastisch auf deren entgegengesetzt zu den Kontaktlamellen der Luftzuführung gerichteten Rückseite (22) zur Anlage kommen können, um die Kontaktlamellen aneinander anzudrücken, und daß, um einen Ansatz auf die Rückseite der Kontaktlamelle des Kühlradiators zu bringen, die Kontaktlamellen der Luftzuführung und des Kühlradiators in einer wechselseitigen Position so miteinander in Kontakt gebracht werden, daß der Ansatz in der entsprechenden Aussparung aufgenommen ist, und die Luftzuführung im Verhältnis zum Kühlradiator entlang der Kontaktebene in der Richtung verschoben wird, die durch die Ausrichtung des Ansatzes definiert ist, damit die Kante (21) der Aussparung unter dem Ansatz eingreift, wobei sie diesen elastisch verformt.

2. Verfahren nach Anspruch 1 , **dadurch gekennzeichnet,** daß die Kontaktebene in etwa vertikal verläuft.

3. Verfahren nach Anspruch 2 , **dadurch gekennzeichnet,** daß die Einhakansätze (9-11) nach unten ausgerichtet sind und alle gleichzeitig auf der besagten Rückseite durch eine Verschiebung der Luftzuführung nach unten eingesetzt werden.

4. Verfahren nach einem der vorangehenden Ansprüche, **dadurch gekennzeichnet,** daß, wenn die Luftzuführung die gewünschte Position im Verhältnis zum Kühlradiator erreicht hat, diese Position anhand von Befestigungselementen, etwa von Schrauben, stabilisiert wird.

5. Verfahren nach Anspruch 4 in Verbindung mit Anspruch 2, **dadurch gekennzeichnet,** daß Befestigungselemente nur am oberen Teil der Verbindung vorgesehen sind, wobei der Kühlradiator und die Luftzuführung am unteren Teil ausschließlich durch die Einhakansätze miteinander in Berührung gehalten werden.

6. Verfahren nach einem der Ansprüche 3 und 5 , **dadurch gekennzeichnet,** daß die Luftzuführung an jeder ihrer Seitenkanten beiderseits des Luftstroms einen Einhakansatz (9) an ihrem oberen Teil und zwei Einhakansätze (10, 11) an ihrem unteren Teil umfaßt.

7. Verfahren nach einem der vorangehenden Ansprüche, **dadurch gekennzeichnet,** daß die Einhakansätze aus den Kontaktlamellen der Luftzuführung ausgeschnitten und leicht aus deren Ebene heraus versetzt sind.

8. Verfahren nach einem der vorangehenden Ansprüche, **dadurch gekennzeichnet,** daß jeder Einhakansatz zunächst mit der Kontaktlamelle des Kühlradiators durch eine im Verhältnis zur Kontaktebene geneigte Angriffsfläche (18) in Berührung kommt, die seine Verformung erleichtert.

9. Luftzuführung zur Kanalisierung eines Luftstroms` die durch das Verfahren nach einem der vorangehenden Ansprüche mit einem Kühlradiator verbunden werden kann, der von dem besagten Luftstrom durchströmt werden soll, wobei diese Luftzuführung Kontaktlamellen (5, 6) umfaßt, die sich in etwa entlang einer quer zur Achse des Luftstroms gerichteten Kontaktebene erstrecken und die mit elastisch biegsamen Einhakansätzen (9-11) versehen sind.

10. Baueinheit, wie sie durch das Verfahren nach einem der Ansprüche 1 bis 8 hergestellt werden kann, umfassend einen Kühlradiator zur Kühlung eines Fluids durch Wärmeaustausch mit einem Luftstrom und eine Luftzuführung zur Kanalisierung des besagten Luftstroms unmittelbar vor oder nach dem Durchgang durch den Radiator, wobei der Kühlradiator und die Luftzuführung durch zugehörige, aneinander angefügte Kontaktlamellen (5, 6 19) miteinander in Berührung kommen, die sich in etwa entlang einer quer zur Achse des Luftstroms verlaufenden Ebene erstrecken, wobei die Kontaktlamellen (5, 6) der Luftzuführung elastisch biegsame Einhakansätze (9-11) aufweisen, die jeweils durch eine Aussparung (9-11) hindurchgehen, die in die Kontaktlamellen (19) des Kühlradiators eingearbeitet sind, und die elastisch auf deren Rückseite (22) in der Nähe der besagten Aussparungen zur Anlage kommen.
